# EUROPÄISCHE PATENTSCHRIFT

(11) **EP 2 776 209 B1**
(45) Veröffentlichungstag und Bekanntmachung des Hinweises auf die Patenterteilung: **05.08.2015**
(21) Anmeldenummer: 12815622.1
(22) Anmeldetag: 05.11.2012
(51) Int. Cl.: B23Q 11/08, B24C 3/20

(54) **VERFAHREN ZUM TAKTWEISEN ABSCHIRMEN EINER ARBEITSKAMMERÖFFNUNG SOWIE EINE ABSCHIRMVORRICHTUNG ZUR DURCHFÜHRUNG DES VERFAHRENS**
METHOD FOR CYCLICALLY SCREENING A WORKING CHAMBER OPENING AND A SCREENING DEVICE FOR CARRYING OUT THE METHOD
PROCÉDÉ POUR PROTÉGER DE FAÇON CYCLIQUE UNE OUVERTURE D'UN COMPARTIMENT DE TRAVAIL ET DISPOSITIF DE PROTECTION POUR LA MISE EN OEUVRE DUDIT PROCÉDÉ

(30) Priorität: 11.11.2011 DE 102011055306
(43) Veröffentlichungstag der Anmeldung: 17.09.2014
(73) Patentinhaber: Wheelabrator Group GmbH, 48629 Metelen (DE)
(72) Erfinder: KAMPEN, Berthold, 48509 Recke (DE); ARTMANN, Josef, 48249 Dülmen (DE); DROPMANN, Heinrich, 48629 Metelen (DE)
(74) Vertreter: Tarvenkorn, Oliver
(86) Internationale Anmeldenummer: PCT/DE2012/100336
(87) Internationale Veröffentlichungsnummer: WO 2013/068001

(56) Entgegenhaltungen:
- EP-A1- 0 202 338
- DE-C1- 4 408 645
- DE-C1- 19 828 074
- GB-A- 951 996
- US-A- 1 713 965

## Beschreibung

Die Erfindung betrifft ein Verfahren zum taktweisen Abschirmen einer Arbeitskammeröffnung bei der Ein- oder Ausschleusung von Werkstücken sowie eine Abschirmvorrichtung zur Durchführung des Verfahrens.

Für die Werkstückbehandlung, insbesondere für die Oberflächenbehandlung mit abrasiven oder Oberflächen verdichtenden Partikeln, werden Arbeitskammern verwendet, um die Umgebung vor dem umherfliegenden Strahlmittel zu schützen. Die Werkstücke werden durch eine Öffnung in der Arbeitskammerwand in die Arbeitskammer hinein transportiert. Die Öffnung wird danach verschlossen, und das Strahlmittel wird über Schleuderräder oder pneumatische Strahlmitteldüsen auf das Werkstück geschleudert. Nachteilig bei einem solchen-diskontinuierlichen Verfahren sind die erforderlichen Rüstzeiten für das Abstellen der Strahlmittelzufuhr, das Öffnen der Arbeitskammeröffnung, das Einfahren des Werkstücks, das Verschließen der Arbeitskammeröffnung und das erneute Starten der Strahlmittelzufuhr und des Bearbeitungsprozesses. Gerade bei hohen Stückzahlen von kleinen Werkstücken ist ein solches Verfahren unwirtschaftlich.

Daneben ist es bekannt, Werkstücke auf einer taktweise verfahrbaren, insbesondere runden Zuführeinrichtung zu platzieren, die das Werkstück durch eine erste Öffnung in die Arbeitskammer hineinschleust und durch eine weitere Öffnung wieder aus dieser herausschleust. Der Vorteil besteht darin, dass das Werkstück bereits außerhalb der Arbeitskammer auf den außen liegenden Teilen der Fördervorrichtung platziert werden kann, während im Inneren der Arbeitskammer noch die Behandlung anderer Werkstücke vorgenommen wird. Währenddessen können auch die zuvor aus der Arbeitskammer herausgefahrenen Werkstücke von der Fördervorrichtung heruntergenommen werden. Zum Aufspannen des nächsten unbehandelten Werkstücks und der Entnahme des zuvor fertig behandelten Werkstücks steht also zumindest die gesamte Zykluszeit zur Verfügung, die im Inneren der Arbeitskammer für die Strahlmittelbehandlung benötigt wird. Ein solches Verfahren erlaubt eine quasi-kontinuierliche, wenngleich auch taktweise Ein- und Ausschleusung von Werkstücken in die Arbeitskammer.

Als Fördervorrichtung werden beispielsweise sogenannte Satellitendrehtische verwendet, die mit einem Teil ihres peripheren Umfangsbereichs aus der Arbeitskammer hinausragen und die mehrere Aufspannvorrichtungen für Werkstücke besitzen. Der Satellitendrehtisch wird taktweise jeweils um einen Winkelschritt gedreht, so dass ein neues Werkstück in die Arbeitskammer gelangt und zugleich ein anderes aus der Arbeitskammer herausgedreht wird. Nach dessen Entnahme ist wieder zumindest ein Platz für eine Neubestückung mit einem weiteren unbehandelten Werkstück gegeben. Problematisch ist hierbei jedoch die Abschirmung der für die Ein- und Ausfuhr der Werkstücke vorgesehenen Arbeitskammeröffnungen vor dem in der Arbeitskammer umherfliegenden Strahlmittel. Werden die Öffnungen nicht abgedichtet, kann das Strahlmittel ungehindert aus der Arbeitskammer heraustreten und gefährdet mit seiner hohen kinetischen Energie Personen und Sachen in der unmittelbaren Umgebung.

Werden in einer Charge stets gleichartige Werkstücke verwendet, so kann eine partielle Abdichtung an den Öffnungen über sogenannte Schablonendichtungen erfolgen, die eine exakt an die projizierte Werkstückkontur angepasste Ausnehmung besitzen, durch welche das Werkstück beim taktweisen Vorschub hindurchtreten kann. Jedoch bleibt auch bei einer Schablonendichtung die für den Durchtritt den Werkstücks vorgesehene Öffnungskontur vollständig frei und ermöglicht den ungehinderten Austritt von Strahlmittel aus der Arbeitskammer.

Bekannt sind weiterhin Strahlmittelvorhänge. Hierbei wird Strahlmittel in einen linienförmigen Trichter oberhalb der Arbeitskammeröffnung aufgegeben. Das Strahlmittel tritt an der Trichtermündung aus und überstreicht damit den gesamten Bereich der Öffnung. Die Masse des herab rieselnden Strahlmittelschleiers ist so groß, dass der Impuls der von den Schleuderrädern oder Strahldüsen in der Arbeitskammer stammenden Strahlmittelpartikel kompensiert werden kann, so dass diese mit dem Strahlmittelschleier zusammen nach unten sinken, wo das Strahlmittel aufgefangen und erneut in den Kreislauf gebracht wird. Die ständige Umwälzung des Strahlmittels zur Aufrechterhaltung des Schleiers erfordert einen hohen konstruktiven Aufwand und benötigt wegen der hohen umgewälzten Massen auch viel Antriebsenergie bei den eingesetzten Fördereinrichtungen. Nachteilig ist daran zudem, dass nach außen vorspringende Konturen des Werkstücks wie ein Regenschirm wirken, so dass darunter Lücken im Strahlmittelschleier vorhanden sind, durch welche wiederum Strahlmittel in die Umgebung austreten kann.

Aus der JP 10328964 A ist ein Arbeitskammersystem mit einer versetzbaren Trennwand bekannt. Die Trennwand verschließt eine Öffnung aus Sicherheitsgründen, muss dann aber für den nächsten Winkelschritt des Drehtisches zur Seite bewegt werden. In dem hier dargestellten Anwendungsfall würde in dem Moment, in dem die Platte bewegt wird, die Öffnung frei liegen und Strahlmittel austreten. Ein quasi-kontinuierlicher Betrieb, ohne Unterbrechung der Strahlmittelzufuhr, ist somit nicht möglich.

Die auf die Anmelderin zurückgehende DE 198 28 074 C1 offenbart ein Arbeitskammersystem mit einer Arbeitskammer mit einer über Türen abgedichteten Ein- und Ausschleusung in einem Ringsystem. Vorgesehen sind einzelne rotierende Förderarme für jeden Werkstückaufgabeplatz. Da die Förderarme einzeln bewegbar sind, können Werkstücke über Zwischenschleusen in die Arbeitskammer ein- und ausgefahren werden, wobei zwar mit den Türen eine gute Abdichtung an den Zwischenschleusen erzielt wird, wobei aber andererseits ein hoher Aufwand betrieben werden muss, um die einzelnen Förderarme unabhängig voneinander antreiben zu können und sie in einer Führung in der Arbeitskammerwand abzudichten.

Aufgabe der vorliegenden Erfindung ist es daher, ein Verfahren zum taktweisen Abschirmen einer Arbeitskammeröffnung sowie eine geeignete Abschirmvorrichtung anzugeben.

Diese Aufgabe wird zunächst für die Einschleusung der Werkstücke durch ein Verfahren mit den Merkmalen des Anspruchs 1 und für die Ausschleusung der Werkstücke durch ein Verfahren mit den Merkmalen des Anspruchs 2.

Des weiteren wird die Aufgabe durch eine Abschirmvorrichtung mit den Merkmalen des Anspruchs 9 gelöst.

Erfindungswesentlich ist also, dass ein überschlagender Einsatz von Abschirmelementen maschinell betrieben wird.

Bei der Einschleusung wird das Werkstück vorzugsweise von einer bequem für einen Arbeiter zu erreichenden Werkstückaufgabeposition an der Fördervorrichtung zunächst in eine Vorbereitungsposition verfahren, die in einer Vorschleuse vor der eigentlichen Arbeitskammeröffnung liegen kann. In dieser wird ein insbesondere plattenförmiges Abschirmelement an der zur Arbeitskammeröffnung gewandten Seite des Werkstücks auf dem Förderelement platziert.

Die Fördereinrichtung wird sodann um einen definierten Transportweg, insbesondere - im Falle der Verwendung eines Satellitendrehtisches - um einen bestimmten Winkelschritt, in Förderrichtung verfahren, wobei bei der bevorzugten Verfahrensvariante das Werkstück in die Arbeitskammer hineingefahren wird und das in Förderrichtung dahinter befindliche Abschirmelement direkt vor oder in der Arbeitskammeröffnung platziert ist und die Öffnung verschließt.

An der in Förderrichtung gesehen rückwärtigen Seite dieses ersten Abschirmelements kann ein Werkstück bereits platziert werden. Wiederum dahinter wird ein identisches zweites Abschirmelement platziert. Beim nächst folgenden Arbeitsschritt wird zunächst das an der Arbeitskammeröffnung befindliche Abschirmelement hoch gezogen und über das in Bereitschaft befindliche zweite Abschirmelement hinweg nach hinten in die nächst folgende Aufnahmeposition gebracht. Danach verfährt die Fördervorrichtung um einen weiteren Takt, wodurch ein neues Werkstück in die Arbeitskammer eingefahren wird und das dahinter befindliche Abschirmelement die Öffnung verschließt.

Der Zyklus im Hinblick auf den überschlagenden Wechsel des ersten und des zweiten Abschirmelements wiederholt sich danach ständig.

Abschirmung bedeutet im Sinne der Erfindung lediglich, dass eine Prallfläche so vor der Arbeitskammeröffnung platziert wird, dass die aus der Kammer heraus fliegenden Partikel dagegen prallen und seitlich bzw. nach oben oder unten abgeleitet werden können. Eine hermetische Abdichtung der Arbeitskammeröffnung ist nicht unbedingt erforderlich, um die Aufgabe der Erfindung zu lösen.

Daher können zwar die Abschirmelemente bei geeigneter Anpassung der Formgebung der Abschirmelemente und des Rahmens der Arbeitskammeröffnung direkt in der Arbeitskammeröffnung oder an der Arbeitskammerwand von außen anliegend platziert werden.

Es reicht jedoch in den meisten Anwendungsfällen, die Abschirmelemente mit Abstand dazu zu platzieren, so dass die direkte Flugbahn der Partikel von der Strahlmittelquelle im Inneren durch die Arbeitskammeröffnung in die Umgebung unterbrochen wird.

Alternativ zu plattenförmigen Abschirmelementen, die zwischen die Werkstückaufgabeplätze der Fördervorrichtung und den dort platzierten Werkstücken gestellt werden, können topf- oder kastenartige Abschirmelemente verwendet werden, die mit ihrer nach unten weisenden Öffnung über ein Werkstück gestülpt werden. Sie werden genauso an oder in die Arbeitskammeröffnung verfahren wie bei den zuvor beschriebenen plattenförmigen Abschirmelementen.

Vorzugsweise wird diese Verfahrensweise zugleich bei der Eintritts- wie bei der Austrittsöffnung der Arbeitskammer, also bei der Einschleusung von Werkstücken in eine Arbeitskammer wie bei der Ausschleusung daraus angewandt.

Vorzugsweise erfolgt die Abschottung derart, dass die Abschirmelemente in entsprechende Halterungen des Förderelements, insbesondere des Satellitendrehtisches, eingesteckt werden, wobei nach oben hin ein Mitnehmerelement aus der Arbeitskammer oder einer daran angesetzten Schleusenabdeckung ragt, welches in einer Kulissenführung in der Decke geführt ist, so dass das Mitnehmerelement beim taktweisen Verfahren der Fördervorrichtung im oberen Bereich einen definierten Weg vollzieht.

Die Kulissenführung muss nicht notwendigerweise eine Lenkung des Mitnehmerelements vollziehen. Es reicht vielmehr, dass durch die Kulissenführung eine ungehinderte Bewegung des nach oben heraus ragenden Mitnehmerelements ermöglicht wird.

Bei Erreichen der jeweils nächsten Position kann das Mitnehmerelement von außen gegriffen werden, um bei Beginn eines neuen Taktes das jeweils in Bewegungsrichtung vorn liegende Abschirmelement nach oben zu ziehen und an einer rückwärtigen Position erneut abzusenken. Diese Verfahrensweise mit den in die Fördervorrichtung eingesteckten Abschirmelementen hat den Vorteil, dass der Vorschub der Abschirmelemente in der einen Richtung durch die Fördereinrichtung selbst erfolgt und nur eine einzige Transportvorrichtung für die Abschirmelemente erforderlich ist, um nämlich die Abschirmelemente entgegen der Förderrichtung zurückzuführen. Auf diese Weise sind keine komplizierten mehrfachen Transportvorrichtungen für die Abschirmelemente erforderlich, die so konstruiert sein müssten, dass sie sich bei einem Vorschub der einen Transportvorrichtung und einem gleichzeitigen Rückzug der anderen Transportvorrichtung samt den jeweils daran hängenden Abschirmelementen nicht gegenseitig behindern würden.

Bei der Ausschleusung ist die Bewegungsrichtung der Fördervorrichtung in Bezug auf die Förderrichtung nahezu gleichartig, in Bezug auf die Arbeitskammeröffnung jedoch umgekehrt, und damit ändert sich auch die Handhabung der Abschirmelemente.

Die Fördervorrichtung vollzieht nämlich in diesem Fall mit ihrer Bewegung den Abtransport des jeweiligen Abschirmelements von der Arbeitskammeröffnung weg, wohingegen die Transportvorrichtung das jeweils andere Abschirmelement gegen die Förderrichtung an die Arbeitskammeröffnung zuführen muss.

Eine zur Durchführung des erfindungsgemäßen Verfahrens geeignete Vorrichtung ist in Anspruch 9 beschrieben. Sie ist sowohl für die Variante der Einwie der Ausschleusung geeignet, wobei lediglich die Steuerung entsprechend angepasst werden muss, um die unterschiedlichen Bewegungsrichtungen abzubilden.

Die vorzugsweise vorgesehenen Zapfenelemente an der Unterkante der Abschirmelemente greifen in Bohrungen der Fördereinrichtung ein, bei welcher es sich insbesondere um einen runden Satellitendrehtisch handelt.

Um ein Verklemmen der in den Drehtisch eingesetzten Zapfen zu vermeiden, gerade auch wenn Strahlmittel hinzutritt, muss zwischen den Aufnahmen im Drehtisch und den Zapfen genügend Spiel vorgesehen werden. Dies zieht zunächst den Nachteil nach sich, dass die in den Drehtisch eingesetzten Abschirmelemente nicht exakt vertikal ausgerichtet sind, sondern aufgrund des großen Spiels kippen können, sobald das Mitnehmerelement von der Transportvorrichtung losgelassen wurde. Die Kulissenführung begrenzt diese mögliche taumelnde Kippbewegung zwar auf eine Richtung, die tangential zur Transportrichtung ist. Es steht aber das nach oben herausragende Mitnehmerelement an der vorne liegenden Entnahmeposition nicht in jedem Fall an einer reproduzierbaren Stelle.

Um dennoch ein sicheres Greifen durch die Transportvorrichtung zwecks Anhebens zu ermöglichen, ist insbesondere vorgesehen, dass das Mitnehmerelement ein Kupplungselement nach Art eines Querriegels an seinem Ende trägt, welcher an der Oberseite unrund ausbildet ist und an der Unterseite rund ausgebildet ist. Zugleich ist an einem Lagerelement der Transportvorrichtung ein Gegenstück zu dem unrunden Oberteil des Riegelelements ausgebildet.

Beispielsweise kann das Oberteil des Riegelelements prismatisch ausgebildet sein mit einer nach oben weisenden Kante. Das Aufnahmeelement der Transportvorrichtung besitzt dann eine zu der Kante kompatible V-förmige Nut. Wird das Riegelelement mit seiner Oberseite in das Aufnahmeelement hineingepresst, kommt es zu einer zwangsweisem Ausrichtung und Zentrierung samt der daran hängenden Abschirmvorrichtung durch die formschlüssige Verbindung. Um das Riegelelement greifen und in das Aufnahmeelement hineinziehen zu können, ist die Unterseite des Riegelelements gerundet ausgebildet, so dass eine ebenfalls gerundet ausgebildete Gabel mit einer Bewegung ähnlich einer Baggerschaufel unter das Riegelelement greifen kann, wobei die runde Ausbildung ein Abgleiten der Klaue an dem Riegelelement erlaubt.

An der Oberseite der Vorrichtung ist eine Kulissenführung vorhanden, die die Form eines "H" ergeben, nämlich mit zwei parallelen - oder im Falle eines Drehtisches auf demselben Teilkreis ausgerichteten radialen - Schlitzen, entsprechend der Einsteck- und der Entnahmeposition der Abschirmelemente, sowie mit wenigstens einem dazwischen verlaufenden Kanal, der parallel zur Bewegungsrichtung des eingesteckten Mitnehmerelements verläuft. Bei einer Kreisbewegung ist dieser Kanal kreisbogenförmig.

Die H-förmige Kulisse ist vorzugsweise Teil einer Zusatzabschirmungsschleuse vor der Arbeitskammer, durch welche die Antriebe zum Heben und Senken sowie zum Rückwärtstransport der Abschirmelemente von der Förderbahn und den Arbeitskammeröffnungen abgeschirmt sind. Damit werden die Antriebe vor Leckströmungen mit Strahlmittel geschützt. Nur das Mitnehmerelement ragt durch die H-förmige Kulissenführung nach außen, welche beispielsweise über Bürstendichtungen abgedichtet wird, die sowohl das Einwie auch das Ausschieben der Abschirmelemente an den vorgesehenen Positionen erlauben, wie auch das Verfahren von der Einsteck- zur Entnahmeposition mit dem nach oben herausragenden Mitnehmerelement.

Eine weitere vorteilhafte Ausgestaltung sieht vor, dass bei gleichartigen zu behandelnden Werkstücken eine aus dem Stand der Technik an sich bekannte Schablonendichtung in oder direkt an der Arbeitskammeröffnung platziert wird. Durch diese wird die Öffnungsfläche der Arbeitskammeröffnung auf das notwendige Minimum begrenzt.

Die Erfindung wird nachfolgend mit Bezug auf die Zeichnung näher erläutert. Die Figuren zeigen im Einzelnen:
- Fig. 1: eine Abschirmvorrichtung in perspektivischer Ansicht;
- Fig. 2: Teile einer Abschirmvorrichtung in perspektivischer Ansicht;
- Fig. 3: Teile einer Abschirmvorrichtung in perspektivischer Ansicht;
- Fig. 4: ein Abschirmelement in perspektivischer Ansicht;
- Fig. 5a - 5d: die Abschirmvorrichtung in schematischer Ansicht von oben

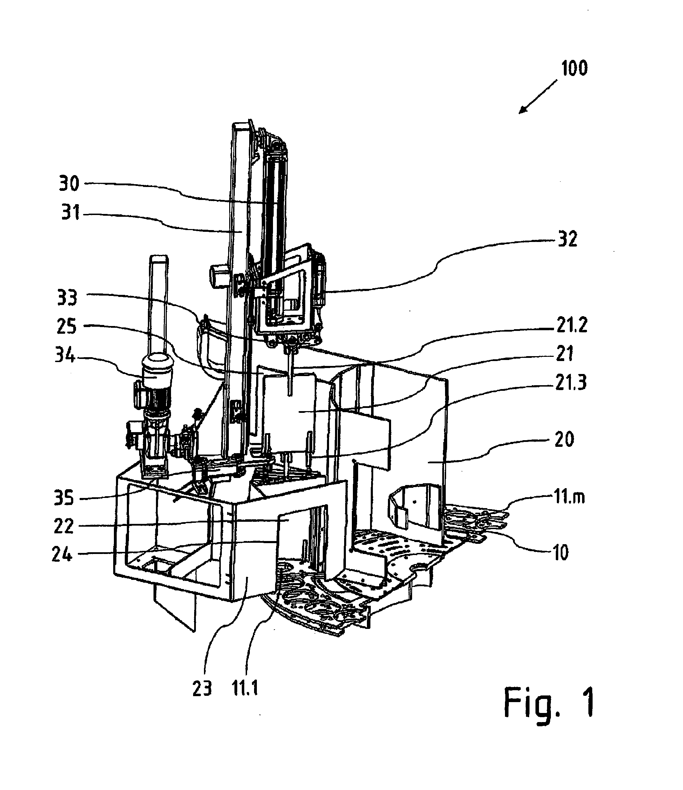

Fig. 1 zeigt eine Abschirmvorrichtung 100 im linken Bereich einer Arbeitskammer 20. Sie umfasst eine Zusatzschleuse 23, die vor die eigentliche Arbeitskammeröffnung gesetzt ist, welche hier nicht sichtbar ist. Diese Umfasst eine Schleusenöffnung 24, die den ungehinderten Zutritt der auf der Fördervorrichtung 10 platzierten Werkstücke erlaubt.

Hinter der in Figur 1 sichtbaren Wand 20, im rechten oberen Bereich der Abbildung, befindet sich die eigentliche Arbeitskammer, während der Bereich am unteren Bildrand frei zugänglich ist. Dort sind auf einer Fördervorrichtung mehrere Werkstückaufgabeplätze 11.1 frei zugänglich, so dass dort Werkstücke vorbereitet werden können.

Eine weitere Abschirmvorrichtung ist spiegelbildlich ausgebildet und ist bei der in Fig. 1 gezeigten Lage der Arbeitskammer im rechten Bereich platziert.

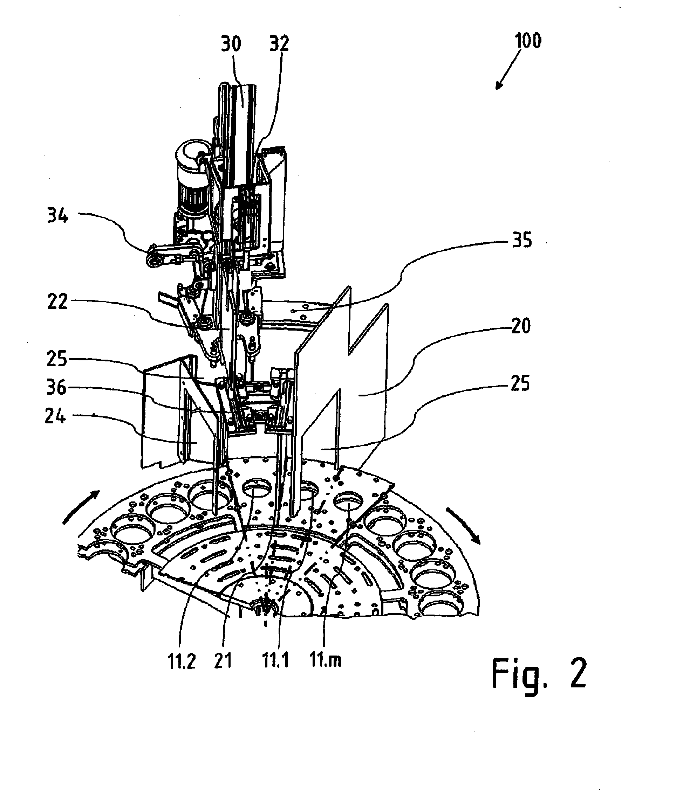

Eine Fördervorrichtung 10 ist wie an sich bekannt als Satellitendrehtisch ausgebildet, der in einem kreisringförmigen Außenbereich eine Vielzahl von Werkstückaufgabeplätzen 11.1, 11.2, ... , 11.m (vgl. Fig. 2) aufweist. Die Oberseite ist plan ausgebildet und bewegt sich unmittelbar entlang der Unterkanten der Wände der Arbeitskammer 20. Strahlmittel, das durch die Öffnungen in der Fördervorrichtung 10 tritt, wird im unteren Bereich aufgefangen und aus der Arbeitskammer entfernt.

Die eigentliche Abschirmvorrichtung 100 umfasst im Wesentlichen zwei plattenförmige Abschirmelemente 21, 22 und eine Transportvorrichtung zum Umsetzen derselben. Die Transportvorrichtung unterteilt sich in eine Hubvorrichtung 30 und eine Umsetzvorrichtung.

Die Abschirmelemente 21, 22 besitzen an ihrer Oberseite jeweils wenigstens ein stangeförmiges Mitnehmerelement 21.2, 22.2, an dem wenigstens ein Kupplungselement 21.1, 22.1 angeordnet ist. An ihrer Unterseite weisen sie jeweils wenigstens einen Zapfen 21.3, 22.3 auf, der in eine Aufnahmesausnehmung in der Fördervorrichtung 10 einsetzbar ist.

Die Hubvorrichtung 30 umfasst einen Linearantrieb oder Pneumatikzylinder, der an einem Portal 31 aufgehängt ist. Darüber kann eine Greifereinrichtung 32 gehoben und gesenkte werden. Die Greifereinrichtung 32 öffnet und schließt einen klauenartigen Greifer 33, mit dem das Kupplungselement 21.1, 22.1 am Ende des Mitnehmerelements 21.2, 22.2 gegriffen werden kann.

Die Umsetzvorrichtung umfasst eine bogenförmige Führungsschiene 35 und einen Antrieb 34 mit Motor und Getriebe. Auf der Führungsschiene 35 ist ein Gleitschlitten gelagert, auf dem die gesamte Hubvorrichtung 30 montiert ist. Hierdurch kann die Hubvorrichtung 30 parallel zur kreisbogenförmigen Bewegungsrichtung der auf der Fördervorrichtung 10 platzierten Abschirmelemente 21, 22 verfahren werden.

Fig. 2 zeigt Teile der Abschirmvorrichtung 100 in einer radialen Blickrichtung aus der Arbeitskammer heraus, wobei wesentliche Teile der Verkleidung nicht dargestellt sind. Von der Arbeitskammer sichtbar sind lediglich Teile der Zusatzschleuse 23 mit der Schleusenöffnung 24 links und eine Arbeitskammerwand 20 mit einer Arbeitskammeröffnung 25.

Unter diesen Abschirmungen dreht sich die Fördervorrichtung 10 hinweg. Sie besitzt an ihrer Oberseite eine Teilung in mehrere Segmente, die die einzelnen Werkstückaufgabeplätze 11.1, 11.2...11.m bilden. Die Aufspannvorrichtungen für die Werkstücke variieren je nach Art des Werkstücks und sind hier nicht gezeigt.

In Figur 2 ist zwischen den Werkstückaufgabeplätzen 11.1, 11.2 ein erstes Abschirmelement 21 eingesetzt. Dessen stangenförmiges Mitnehmerelement erstreckt sich nach oben durch eine ortsfeste Kulissenführung 36. Ein zweites Abschirmelement 22 ist mit dem Greifer 33 gegriffen und von der Hubvorrichtung 30 angehoben. Die Umsetzvorrichtung hat die Hubvorrichtung 30 auf der Führungsschiene 35 entgegen der Förderrichtung, welche durch die Pfeile angedeutet ist, nach links bewegt. Dort steht die Hubvorrichtung 30 nun bereit, um das zweite Abschirmelement 22 durch die Kulissenführung 36 bis auf den Drehtisch abzusenken.

Die Kulissenführung 36 ist H-förmig ausgebildet mit zwei quer zur Förderrichtung ausgerichteten Querschlitzen, durch welche die Abschirmelemente 21, 22 ein- und ausschiebbar sind, und mit einem in den Querschlitzen mündenden Längsschlitz, durch welchen das Mitnehmerelement 21.2, 22.2 in Förderrichtung verfahrbar ist.

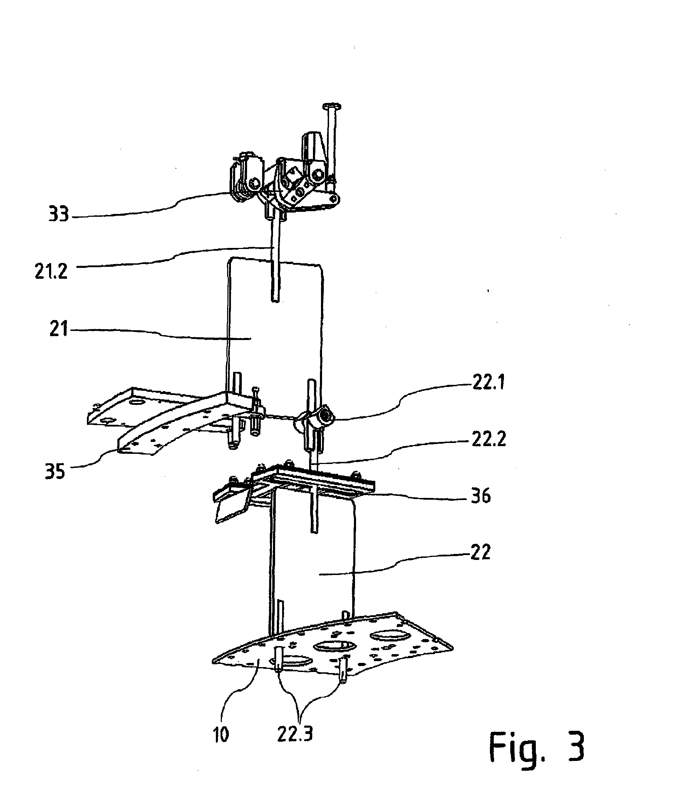

Figur 3 zeigt perspektivisch von außen unten die wesentlichen Teile der Abschirmvorrichtung 100 in dergleichen Stellung wie in den Figuren 1 und 2.

Deutlich sichtbar sind die Zapfen 21.3, die sich von der Unterseite des Abschirmelements 21 aus nach erstrecken, wo sie in Ausnehmungen in der Fördervorrichtung 10 eingesteckt sind. Durch diese formschlüssige Verbindung sind die Abschirmelemente an der Fördervorrichtung 10 festgelegt und können jeweils mit der schrittweisen Bewegung der Fördervorrichtung 10 in die nächste Position gebracht werden.

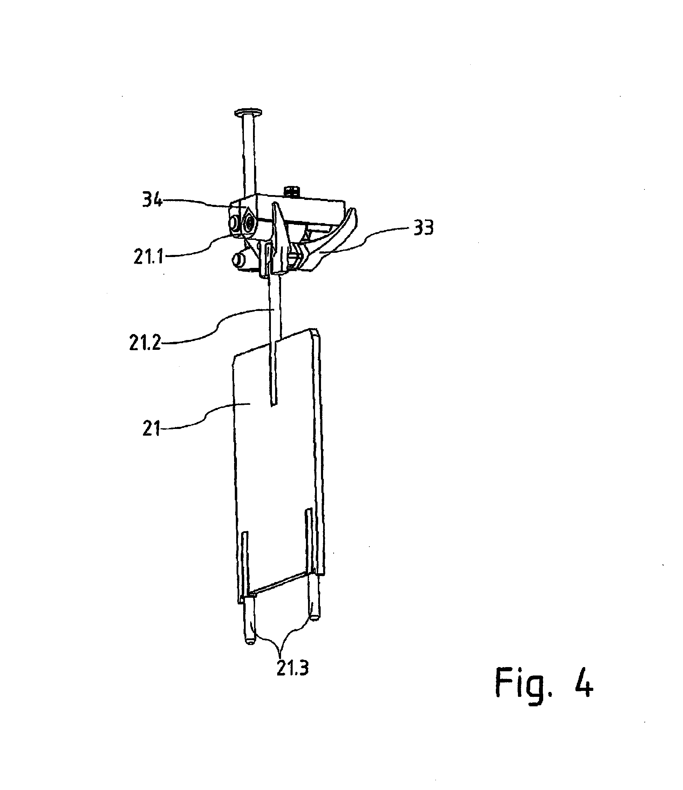

An der Oberseite endet, wie insbesondere in Figur 4 erkennbar, das Mitnehmerelement 21.2 in einem Kupplungselement 21.1, das oben prismatisch ausgebildet ist und dadurch eine nach oben weisende Kante aufweist. Kompatibel dazu ist ein Aufnahmeelement 34 an der Greifervorrichtung ausgebildet. An der Unterseite ist das Kupplungselement 21.1 gerundet, und die Greifervorrichtung besitzt bogenförmig ausgebildete Klauen, die rechts und links an dem Mitnehmerelement vorbei unter das Kupplungselement 21.1 greifen. Durch die beschriebene Ausbildung wird erreicht, dass sich das gesamte Abschirmelement 21 gegenüber der Greifervorrichtung zentriert, wenn die Klauen 33 geschlossen werden. Die gerundeten Klauen 33 gleiten zunächst über die gerundete Unterseite des Kupplungselements 21.1 hinweg und ziehen zugleich den oberen prismatischen Bereich in das Aufnahmeelement 34 hinein, so dass eine formschlüssige Festlegung in mehreren Richtungen erreicht wird.

Ein Abschirmelement 21, das aufgrund des großen Spiels zwischen den Zapfen 21.3 und den Ausnehmungen in der Fördervorrichtung 10, in die die Zapfen 21.3 eingesteckt werden, möglicherweise schief zur horizontalen Bewegungsebene der Fördervorrichtung 10 steht, wird also beim Greifen wieder in eine definierte Lage gebracht.

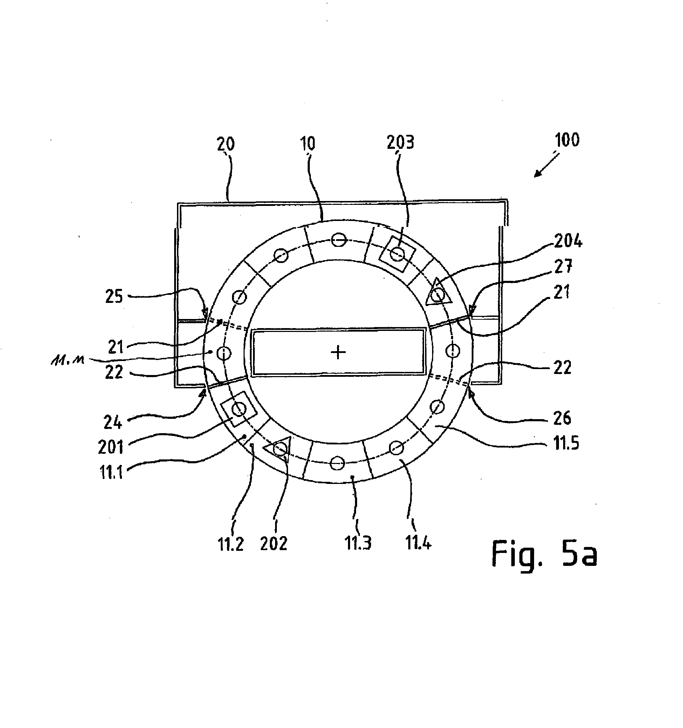

Die Bewegungsabfolge im erfindungsgemäßen Verfahren wird anhand der folgenden Figuren 5a bis 5d näher erläutert.

Gezeigt sind jeweils Abschirmvorrichtungen 100 an einer geschlossenen Arbeitskammer 20. Die Drehrichtung der Fördervorrichtung 10 ist hier im Uhrzeigersinn, so dass die Einschleusung an einer Arbeitskammeröffnung 25 im linken Bildbereich und die Ausschleusung an einer Arbeitskammeröffnung 27 im rechten Bildbereich erfolgt. Der untere Bildbereich liegt außerhalb der Arbeitskammer 20. Dort sind einige Werkstückaufgabeplätze 11.1 ... 11.5 für das Bestücken mit und das Entnehmen von Werkstücken 201 ... 204 frei zugänglich.

Figur 5a zeigt eine Situation, bei der sich bereits zwei Werkstücke 203, 204 innerhalb der Arbeiterkammer 20 befinden. Außerhalb der Arbeitskammer 20 sind an Werkstückaufgabeplätzen 11.1, 11.2 zwei Werkstücke 201, 202 auf die Fördervorrichtung 10 aufgesetzt. Die Arbeiterkammeröffnung 25 war im vorausgehenden Produktionsschritt durch ein erstes Abschirmelement 21 verschlossen, das nun angehoben worden ist, wie durch die gestrichelte Darstellung der Linie angedeutet, welche das Abschirmelement 21 symbolisiert. Dahinter - in der im Uhrzeigersinn verlaufenden Förderrichtung - ist ein zweites Abschirmelement 22 platziert.

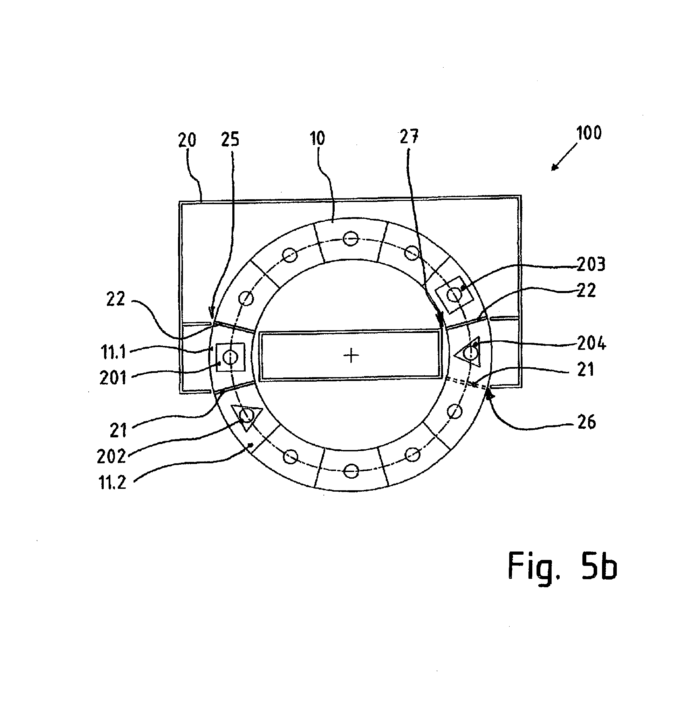

Sobald die Fördervorrichtung 10 um einen weiteren Winkelschritt im Uhrzeigersinn gedreht wird, gelangt entsprechend Figur 5b das zweite Abschirmelement 22 an oder in die Arbeiterkammeröffnung 25.

Der erste Werkstückaufgabeplatz 11.1 mit dem ersten Werkstück 201 liegt nun in der Schleuse zwischen der Arbeiterkammeröffnung 25 und der Öffnung 27 in der äußeren Abdeckung der Schleuse.

Zwischen dem ersten Werkstückaufgabeplatz 11.1 und dem zweiten Werkstückaufgabeplatz 11.2 ist bereits das andere Abschirmelement 21 in die Fördervorrichtung 10 eingesetzt. Es könnte aber auch noch in einer angehobenen Stellung darüber verweilen.

Noch bei der Situation gemäß Figur 5b ist auf der Ausschleusungsseite das Werkstück 204 in die Schleuse zwischen den Öffnungen 27 und 26 gelangt. Das Werkstück 203 befindet sich noch innerhalb der Arbeitskammer 20.

Die Arbeiterkammeröffnung 27 für die Ausschleusung ist durch ein Abschirmelement 22 verschlossen. Das andere Abschirmelement 21 befindet sich außerhalb der Arbeiterkammer 20 und kann bereits angehoben werden.

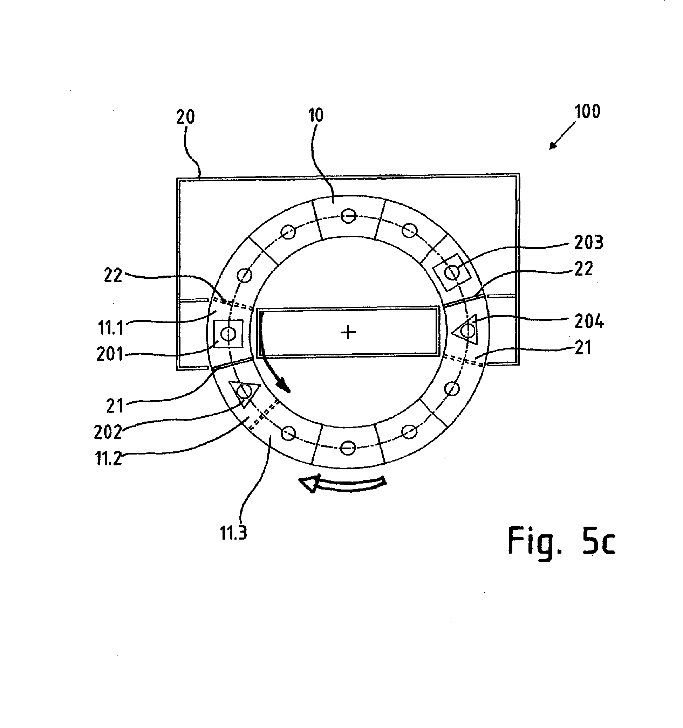

Figur 5c zeigt den nächsten Schritt in der Abfolge. Die Fördervorrichtung 10 steht noch unverändert, so dass auch die Position der Werkstücke 201 ... 204 unverändert ist. Das bei der Arbeiterkammeröffnung 25 befindliche Abschirmelement 22 wird angehoben und entsprechend der im Innenkreis skizzierten Pfeilrichtung entgegen der Drehrichtung der Fördervorrichtung 10 auf die übernächste Position versetzt. Alsdann wird die Fördervorrichtung 10 um einen Winkelschritt vorgedreht, wie durch den Pfeil an der Außenseite dargestellt.

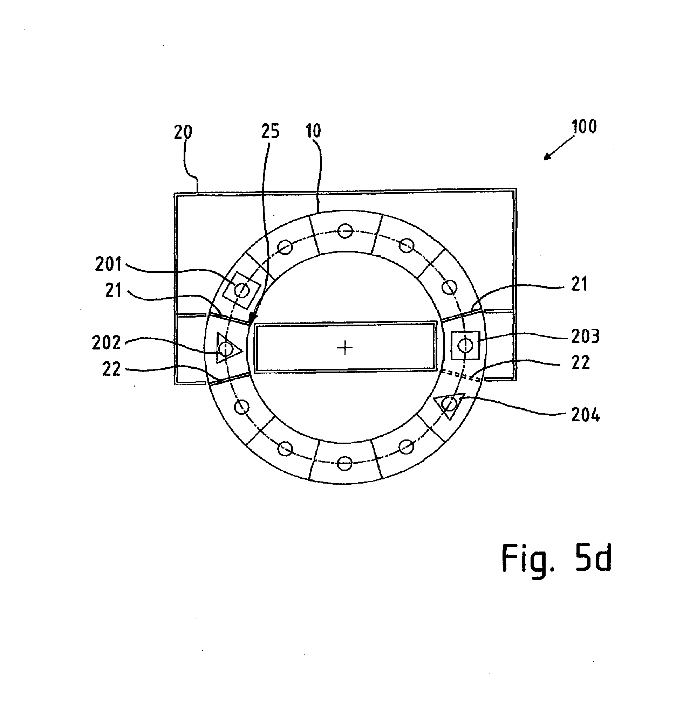

Es wird sodann die in Figur 5d gezeigte Stellung erreicht. Auf der Einschleusungsseite liegt nun das Werkstück 201 innerhalb der Arbeitskammer 20. Die Arbeitskammeröffnung 25 ist durch das Abschirmelement 21 abgedeckt. Das andere Abschirmelement 22 befindet sich hinter dem zweiten Werkstück 202 in Bereitschaft.

Auf der Ausschleusungsseite ist das Werkstück 204 vollständig aus der Arbeitskammer 20 und auch aus der Schleuse hinter der Arbeitskammeröffnung 27 herausgetreten. Dabei ist zugleich das Abschirmelement 22 mit der Fördervorrichtung transportiert worden. Für den überschlagenden Wechsel ist dabei das andere Abschirmelement 21 von der Stellung gemäß Figur 2c an die Arbeitskammeröffnung 27 gesetzt worden.

Mit weiteren Werkstücken, die auf den folgenden Werkstückaufgabeplätzen 11.3, ... positioniert sind, wird der Zyklus des Wechsels der Abschirmelemente 21, 22 jeweils an der Einschleusungs- und der Ausschleusungsseite gemäß den Figuren 5b bis 5d wiederholt.

## Patentansprüche

1. Verfahren zum taktweisen Abschirmen einer Arbeitskammeröffnung (25) bei der Einschleusung von Werkstücken (201, 202), mit wenigstens folgenden Schritten:
a) Bereitstellen wenigstens eines Werkstücks (201) auf einer durch die Arbeitskammeröffnung (25) hindurch führenden Fördervorrichtung (10) an einem außerhalb der Arbeitskammer (20) gelegenen ersten Werkstückaufgabeplatz (11.1) und Platzierung eines ersten Abschirmelements (21) auf dem oder in Förderrichtung gesehen hinter dem ersten Werkstückaufgabeplatz (11.1);
b) Platzierung eines zweiten Abschirmelements (22) in Förderrichtung gesehen hinter einem zweiten Werkstückaufgabeplatz (11.2);
c) Einschleusen des ersten Werkstücks in die Arbeitskammer (20) und Platzierung des ersten Abschirmelements (21) an oder in der Arbeitskammeröffnung (25) durch Vorschub der Fördervorrichtung (10);
d) Entfernen des ersten Abschirmelements (21) von der Arbeitskammeröffnung (25) und Platzierung desselben in Förderrichtung gesehen hinter dem zweiten Abschirmelement (22) mittels einer Transportvorrichtung;
e) Wiederholung der Schritte b) bis d) in Bezug auf die folgenden Werkstückaufgabeplätze (11.2,11.3,...,11.m) der Fördervorrichtung (10) und mit jeweiligem überschlagendem Wechsel der Abschirmelemente (21,22).

2. Verfahren zum taktweisen Abschirmen einer Arbeitskammeröffnung (27) bei der Ausschleusung von Werkstücken, mit wenigstens folgenden Schritten:
a) Platzierung eines ersten Abschirmelements (22) an der Arbeitskammeröffnung (27);
b) Ausschleusen wenigstens eines Werkstücks (203), das auf einem ersten Werkstückaufgabeplatz einer durch die Arbeitskammeröffnung (27) hindurch führenden Fördervorrichtung (10) positioniert ist sowie Vorschub des ersten Abschirmelements (21) durch Vorschub der Fördervorrichtung (10);
c) Platzierung eines zweiten Abschirmelements (21) an der Arbeitskammeröffnung (27), in Förderrichtung gesehen hinter dem ersten Abschirmelement (21) und hinter dem Werkstückaufgabeplatz mittels einer Transportvorrichtung;
d) Entnehmen des Werkstücks (204) von der Fördervorrichtung (10)
e) Wiederholung der Schritte b) und c) in Bezug auf die weiteren Werkstückaufgabeplätze und mit überschlagendem Wechsel der Abschirmelemente (21, 22).

3. Verfahren nach Anspruch 1 oder 2, **dadurch gekennzeichnet, dass** die Abschirmelemente (21, 22) zwischen den Werkstückaufgabeplätzen (11.1, ..., 11.m) und den dort platzierten Werkstücken (201 ... 204) positioniert werden.

4. Verfahren nach Anspruch 1 oder 2, **dadurch gekennzeichnet, dass** topfartig oder kastenförmig ausgebildete Abschirmelemente verwendet werden, die auf den Werkstückaufgabeplätzen (11.1, ..., 11.m) positioniert werden und die über die dort platzierten Werkstücken (201 ... 204) gestülpt werden.

5. Verfahren nach wenigstens einem der Ansprüche 1 bis 4, **dadurch gekennzeichnet, dass** die Abschirmelemente (21, 22) auf der Fördervorrichtung (10) abgesetzt werden.

6. Verfahren nach wenigstens einem der Ansprüche 1 bis 5, **dadurch gekennzeichnet, dass** die Abschirmelemente (21, 22) in die Oberseite der Fördervorrichtung (10) eingesteckt werden.

7. Verfahren nach wenigstens einem der Ansprüche 1 bis 6, **dadurch gekennzeichnet, dass** eine endlose Fördervorrichtung (10) verwendet wird, die durch eine erste Arbeitskammeröffnung (25) in die Arbeitskammer (20) hineinführt und an einer zweiten Arbeitskammeröffnung (26) aus dieser heraus führt.

8. Verfahren nach Anspruch 7, **dadurch gekennzeichnet, dass** ein Satellitendrehtisch als Fördervorrichtung (10) verwendet wird, bei der die Werkstückaufgabeplätze (11.1, 11.2, ..., 11.n) in einem kreisringförmigen Bereich angeordnet sind.

9. Abschirmvorrichtung (100) zum taktweisen Abschirmen einer Arbeitskammeröffnung (25, 27) in einer Arbeitskammer (20) zur Durchführung des Verfahrens gemäß den Ansprüchen 1 bis 8 mit wenigstens:
- einem ersten und einem zweiten Abschirmelement (21, 22);
- einer Fördervorrichtung (10) mit mehreren Werkstückaufgabeplätzen (11.1, 11.2 ... 11.m), an denen wenigstens je eine Aufnahme für die Abschirmelemente (21, 22) vorgesehen ist;
- einer Hubvorrichtung (30) zum Heben und Senken einer zur Aufnahme der Abschirmelemente (21, 22) ausgebildeten Greifervorrichtung (32, 33) und
- einer Umsetzvorrichtung (34, 35) zum Verfahren der Hubvorrichtung (30, 31) längs der Förderrichtung.

10. Abschirmvorrichtung (100) nach Anspruch 9, **dadurch gekennzeichnet, dass** die Abschirmelemente (21, 22) an ihrer Unterseite jeweils wenigstens einen Zapfen (21.3, 22.3) aufweisen, der in eine Aufnahmeausnehmung in der Oberseite der Fördervorrichtung (10) einsetzbar ist.

11. Abschirmvorrichtung (100) nach Anspruch 9 oder 10, **dadurch gekennzeichnet, dass** die Abschirmelemente (21, 22) an ihrer Oberseite jeweils wenigstens ein Mitnehmerelement aufweisen (21.2, 22.2), an dem wenigstens ein Kupplungselement (21.1, 22.1) angeordnet ist.

12. Abschirmvorrichtung (100) nach einem der vorhergehenden Ansprüche 9 bis 11, **dadurch gekennzeichnet, dass** das Mitnehmerelement (21.1, 22.1) stangenförmig ausgebildet ist und sich durch eine ortsfeste Kulissenführung (36) erstreckt.

13. Abschirmvorrichtung (100) nach Anspruch 12, **dadurch gekennzeichnet, dass** die Kulissenführung (36) H-förmig ausgebildet ist mit zwei quer zur Förderrichtung ausgerichteten Querschlitzen, in welche die Abschirmelemente (21, 22) einschiebbar sind, und mit einem in den Querschlitzen mündenden Längsschlitz, in welchem das Mitnehmerelement (21.2, 22.2) verfahrbar ist.

14. Abschirmvorrichtung (100) nach einem der vorhergehenden Ansprüche 9 bis 13, **dadurch gekennzeichnet, dass** das Kupplungselement (21.1, 22.1) an seiner Oberseite prismatisch ausgebildet ist und dass die Greifervorrichtung (33) ein dazu kompatibles Aufnahmeelement (34) aufweist.

15. Abschirmvorrichtung (100) nach einem der vorhergehenden Ansprüche 9 bis 14, **dadurch gekennzeichnet, dass** das Kupplungselement (21.1, 22.1) an seiner Unterseite gerundet ist und dass der Greifer konkave Klauen (33) aufweist.

## Claims

1. Method for cyclically screening a working-chamber opening (25) when channelling in workpieces (201, 202), comprising at least the following steps:
a) providing at least one workpiece (201) on a conveying device (10), which leads through the working-chamber opening (25), on a first workpiece-dispatch space (11.1) which is outside the working chamber (20), and placing a first screening element (21) on the first workpiece-dispatch space (11.1) or there behind, when viewed in the conveying direction;
b) placing a second screening element (22) behind a second workpiece-dispatch space (11.2), when viewed in the conveying direction;
c) channelling the first workpiece into the working chamber (20) and placing the first screening element (21) at or in the working-chamber opening (25) by indexing the conveying device (10);
d) removing the first screening element (21) from the working-chamber opening (25), and placing the said first screening element (21) behind the second screening element (22), when viewed in the conveying direction, by means of a transport device;
e) repeating steps b) to d) in relation to the following workpiece-dispatch spaces (11.2, 11.3, ..., 11.m) of the conveying device (10) and in each case with a rolling changeover of the screening elements (21, 22).

2. Method for cyclically screening a working-chamber opening (27) when channelling out workpieces, comprising at least the following steps:
a) placing a first screening element (22) at the working-chamber opening (27);
b) channelling out at least one workpiece (203) which is positioned on a conveying device (10) which leads through the working-chamber opening (27), and indexing the first screening element (21) by indexing the conveying device (10);
c) placing a second screening element (22) at the working-chamber opening (27) behind the first screening element (21), when viewed in the conveying direction, and behind the workpiece-dispatch space, by means of a transport device;
d) removing the workpiece (204) from the conveying device (10);
e) repeating steps b) and c) in relation to the further workpiece-dispatch spaces and with a rolling changeover of the screening elements (21, 22).

3. Method according to Claim 1 or 2, **characterized in that** the screening elements (21, 22) are positioned between the workpiece-dispatch spaces (11.1, ..., 11.m) and the workpieces (201 ... 204) which are placed there.

4. Method according to Claim 1 or 2, **characterized in that** screening elements, which are configured so as to be pot-shaped or box-shaped and which are positioned on the workpiece-dispatch spaces (11.1, ..., 11.m) and which are put over the workpieces (201 ... 204) which are placed there, are used.

5. Method according to at least one of Claims 1 to 4, **characterized in that** the screening elements (21, 22) are landed onto the conveying device (10).

6. Method according to at least one of Claims 1 to 5, **characterized in that** the screening elements (21, 22) are inserted into the upper side of the conveying device (10).

7. Method according to at least one of Claims 1 to 6, **characterized in that** a continuous conveying device (10), which leads through a first working-chamber opening (25) into the working chamber (20) and at a second working-chamber opening (26) leads out therefrom, is used.

8. Method according to Claim 7, **characterized in that** a satellite rotary table, in which the workpiece-dispatch spaces (11.1, 11.2, ..., 11.n) are arranged in a circular region, is used as the conveying device (10).

9. Screening device (100) for cyclically screening a working-chamber opening (25, 27) in a working chamber (20), for carrying out the method according to Claims 1 to 8, having at least:
- one first and one second screening element (21, 22);
- a conveying device (10) having a plurality of workpiece-dispatch spaces (11.1, 11.2, ..., 11.m) on which at least in each case one receptacle for the screening elements (21, 22) is provided;
- a lifting device (30) for lifting and lowering a gripper device (32,33) which is configured for receiving the screening elements (21, 22); and
- a relocating device (34, 35) for displacing the lifting device (30, 31) along the conveying direction.

10. Screening device (100) according to Claim 9, **characterized in that** the screening elements (21, 22) on their lower side have in each case at least one pin (21.3, 22.3) which is insertable into a receptacle clearance in the upper side of the conveying device (10).

11. Screening device (100) according to Claim 9 or 10, **characterized in that** the screening elements (21, 22) on their upper side have in each case at least one entrainment element (21.2, 22.2) on which at least one coupling element (21.1, 22.1) is disposed.

12. Screening device (100) according to one of the preceding claims 9 to 11, **characterized in that** the entrainment element (21.2, 22.2) is configured so as to be rod-shaped and extends through a locationally fixed gate-type guide (36).

13. Screening device (100) according to Claim 12, **characterized in that** the gate-type guide (36) is configured so as to be H-shaped, having two transverse slots which are oriented in a transverse manner to the conveying direction and into which the screen elements (21, 22) are introducible, and having a longitudinal slot which opens into the transverse slots and in which the entrainment element (21.2, 22.2) is displaceable.

14. Screening device (100) according to one of the preceding Claims 9 to 13, **characterized in that** the coupling element (21.1, 22.1) on its upper side is configured so as to be prismatic, and **in that** the gripper device (33) has a receptacle element (34) which is complementary thereto.

15. Screening device (100) according to one of the preceding Claims 9 to 14, **characterized in that** the coupling element (21.1, 22.1) on its lower side is rounded, and **in that** the gripper has concave claws (33).

## Revendications

1. Procédé pour protéger de façon cyclique une ouverture d'un compartiment de travail (25) lors de l'introduction de pièces (201, 202), comprenant au moins les étapes suivantes :
a) fourniture d'au moins une pièce (201) sur un dispositif de transport (10) conduisant à travers l'ouverture du compartiment de travail (25) au niveau d'un premier poste de chargement de pièces (11.1) disposé à l'extérieur du compartiment de travail (20) et positionnement d'un premier élément de protection (21) sur le ou, vu dans la direction de transport, derrière le premier poste de chargement de pièces (11.1) ;
b) positionnement d'un deuxième élément de protection (22), vu dans la direction de transport, derrière un deuxième poste de chargement de pièces (11.2) ;
c) introduction de la première pièce dans le compartiment de travail (20) et positionnement du premier élément de protection (21) sur ou dans l'ouverture du compartiment de travail (25) par avance du dispositif de transport (10) ;
d) enlèvement du premier élément de protection (21) de l'ouverture du compartiment de travail (25) et positionnement de celui-ci, vu dans la direction de transport, derrière le deuxième élément de protection (22) au moyen d'un dispositif de transport ;
e) répétition des étapes b) à d) en relation avec les postes de chargement de pièces suivants (11.2, 11.3,..., 11.m) du dispositif de transport (10) et avec changement par passage l'un au-dessus de l'autre des éléments de protection respectifs (21, 22).

2. Procédé pour protéger de façon cyclique une ouverture d'un compartiment de travail (27) lors de l'introduction de pièces, comprenant au moins les étapes suivantes :
a) positionnement d'un premier élément de protection (22) au niveau de l'ouverture du compartiment de travail (27) ;
b) éjection d'au moins une pièce (203) qui est positionnée sur un premier poste de chargement de pièces d'un dispositif de transport (10) conduisant à travers l'ouverture du compartiment de travail (27) et avance du premier élément de protection (21) par avance du dispositif de transport (10) ;
c) positionnement d'un deuxième élément de protection (22) au niveau de l'ouverture du compartiment de travail (27), vu dans la direction de transport, derrière le premier élément de protection (21) et derrière le poste de chargement de pièces au moyen d'un dispositif de transport ;
d) enlèvement de la pièce (204) du dispositif de transport (10),
e) répétition des étapes b) et c) en relation avec les autres postes de chargement de pièces et avec changement par passage l'un au-dessus de l'autre des éléments de protection (21, 22).

3. Procédé selon la revendication 1 ou 2, **caractérisé en ce que** les éléments de protection (21, 22) sont positionnés entre les postes de chargement de pièces (11.1,..., 11.m) et les pièces (201 ... 204) placées à cet endroit.

4. Procédé selon la revendication 1 ou 2, **caractérisé en ce que** l'on utilise des éléments de protection réalisés en forme de pot ou en forme de caisse qui sont positionnés sur les postes de chargement de pièces (11.1,..., 11.m) et qui sont retournés pardessus les pièces (201 ... 204) placées à cet endroit.

5. Procédé selon au moins l'une quelconque des revendications 1 à 4, **caractérisé en ce que** les éléments de protection (21, 22) sont déposés sur le dispositif de transport (10).

6. Procédé selon au moins l'une quelconque des revendications 1 à 5, **caractérisé en ce que** les éléments de protection (21, 22) sont enfichés dans le côté supérieur du dispositif de transport (10).

7. Procédé selon au moins l'une quelconque des revendications 1 à 6, **caractérisé en ce qu'**un dispositif de transport sans fin (10) est utilisé, lequel conduit à travers une première ouverture de compartiment de travail (25) dans le compartiment de travail (20) et conduit hors de celui-ci au niveau d'une deuxième ouverture de compartiment de travail (26).

8. Procédé selon la revendication 7, **caractérisé en ce qu'**une table tournante satellite est utilisée en tant que dispositif de transport (10), dans lequel les postes de chargement de pièces (11.1, 11.2,..., 11.n) sont disposés dans une région de forme annulaire circulaire.

9. Dispositif de protection (100) pour protéger de façon cyclique une ouverture de compartiment de travail (25, 27) dans un compartiment de travail (20) pour mettre en oeuvre le procédé selon les revendications 1 à 8, comprenant au moins :
- un premier et un deuxième élément de protection (21, 22) ;
- un dispositif de transport (10) comprenant plusieurs postes de chargement de pièces (11.1, 11.2 ... 11.m) au niveau desquels est prévu au moins à chaque fois un logement pour les éléments de protection (21, 22) ;
- un dispositif de levage (30) pour soulever et abaisser un dispositif de préhension (32, 33) réalisé pour recevoir les éléments de protection (21, 22) et
- un dispositif de déplacement (34, 35) pour déplacer le dispositif de levage (30, 31) le long de la direction de transport.

10. Dispositif de protection (100) selon la revendication 9, **caractérisé en ce que** les éléments de protection (21, 22) présentent au niveau de leur côté inférieur à chaque fois au moins un tourillon (21.3, 22.3) qui peut être inséré dans un évidement de réception dans le côté supérieur du dispositif de transport (10).

11. Dispositif de protection (100) selon la revendication 9 ou 10, **caractérisé en ce que** les éléments de protection (21, 22) présentent au niveau de leur côté supérieur à chaque fois au moins un élément d'entraînement (21.2, 22.2) au niveau duquel est disposé au moins un élément d'accouplement (21.1, 22.1).

12. Dispositif de protection (100) selon l'une quelconque des revendications précédentes 9 à 11, **caractérisé en ce que** l'élément d'entraînement (21.2, 22.2) est réalisé en forme de tige et s'étend à travers un guide à coulisse fixe (36).

13. Dispositif de protection (100) selon la revendication 12, **caractérisé en ce que** le guide à coulisse (36) est réalisé en forme de H avec deux fentes transversales orientées transversalement par rapport à la direction de transport, dans lesquelles les éléments de protection (21, 22) peuvent être insérés, et comprenant une fente longitudinale débouchant dans les fentes transversales, dans laquelle l'élément d'entraînement (21.2, 22.2) peut être déplacé.

14. Dispositif de protection (100) selon l'une quelconque des revendications précédentes 9 à 13, **caractérisé en ce que** l'élément d'accouplement (21.1, 22.1) est réalisé sous forme prismatique au niveau de son côté supérieur et **en ce que** le dispositif de préhension (33) présente un élément de réception (34) compatible avec celui-ci.

15. Dispositif de protection (100) selon l'une quelconque des revendications précédentes 9 à 14, **caractérisé en ce que** l'élément d'accouplement (21.1, 22.1) est arrondi au niveau de son côté inférieur et **en ce que** le dispositif de préhension présente des griffes concaves (33).
